# EUROPEAN PATENT SPECIFICATION

(11) **EP 4 087 742 B1**
(45) Date of publication and mention of the grant of the patent: **01.05.2024**
(21) Application number: 21700014.0
(22) Date of filing: 05.01.2021
(51) Int. Cl.: B62D 21/02, B60G 7/02, B60G 9/00, B60G 11/27, B60G 11/46, B62D 21/10, B62D 21/11

(54) **CHASSIS MOUNTING UNIT**
FAHRWERKSMONTAGEEINHEIT
UNITÉ DE MONTAGE DE CHÂSSIS

(30) Priority: 10.01.2020 NL 2024646
(43) Date of publication of application: 16.11.2022
(73) Proprietor: VDL Weweler B.V., 7325 WC Apeldoorn (NL)
(72) Inventor: SCHRIER, Tom, 7323 TE APELDOORN (NL); AALDERINK, Derk, Geert, 7245 NV LAREN (NL); TEN HOOR, Adriaan, Hendrik, Gerard, 7326 DG APELDOORN (NL)
(74) Representative: EP&C
(86) International application number: PCT/EP2021/050086
(87) International publication number: WO 2021/140100

(56) References cited:
- EP-A1- 1 911 661
- EP-A2- 1 777 085
- DE-A1-102014 010 648
- DE-U1- 20 300 428
- US-A- 3 960 388
- US-A- 5 683 098
- US-A1- 2009 267 338
- US-A1- 2012 223 498
- US-B2- 8 960 694

## Description

The invention relates to a chassis mounting unit for mounting a bearing bracket to a vehicle chassis, said bearing bracket adapted to pivotally mount a trailing arm of a wheel axle suspension, wherein the mounting unit comprises a mounting plate adapted to mount the bearing bracket against.

US 8.960.694, on which the preamble of claim 1 is based, discloses a chassis frame wherein an upper end portion of a mounting plate is bolted to a longitudinal chassis beam. A bearing bracket is constituted by two side plates bolted to a lower end portion of the mounting plate. A strut element is bolted to an overhead transverse chassis beam and is attached to a pivot bolt for mounting a trailing arm to the bearing bracket.

Other chassis mounting structures for mounting a bearing bracket to a vehicle chassis and comprising a transverse strut beam are shown in DE 102014010648, DE 20300428, EP 1777085, EP 1911661 and US 2009/267338.

The invention has for an object to provide an improved chassis component for mounting a bearing bracket.

This object is achieved by a chassis mounting unit according to claim 1.

An advantage of this chassis mounting unit is that, since the strut beam is connected to the mounting plate, the bearing bracket or the pivot bolt of the wheel axle suspension can be easily mounted to the chassis without having to bother about a strut, which has to be connected to the bearing bracket. Also removal of the bearing bracket from the mounting plate without removing or loosening the strut beam becomes possible, whereby disassembly of the suspension from the chassis becomes simpler and replacement of suspension parts becomes easier.

In a preferred embodiment, the mounting plate lies substantially in a first plane, and the strut beam lies substantially in a second plane, which is transverse, preferably perpendicular, to the first plane.

The mounting plate has an upper half and a lower half, wherein preferably the first end of the strut beam is welded to the lower half of the mounting plate.

In a preferred embodiment, the mounting plate has an upper edge adapted to be welded to a longitudinal chassis beam of the vehicle chassis. Alternatively or in addition, the mounting plate may have mounting holes at least in a zone near the upper edge for bolting the mounting plate to a longitudinal chassis beam.

In a preferred embodiment the strut beam extends inclined upwardly.

The second end of the strut member may be located on a height level beyond the height level of the upper edge of the mounting plate.

In a preferred embodiment, the second end of the strut beam is adapted to be welded to the overhead chassis beam. Alternatively or in addition, the strut beam may have a zone near the second end, which has mounting holes adapted to bolt said zone to the overhead chassis beam.

The mounting plate has mounting holes for bolting a bearing bracket to the mounting plate. These mounting holes may be alignment holes, e.g. slotted holes such that the bearing bracket can be aligned with respect to the chassis. Thereby the axle can be aligned with respect to the chassis. Another option is that the mounting plate has round holes, and that the side plates of the bearing bracket have alignment holes, e.g. slotted holes to allow alignment of the bearing bracket with respect to the chassis.

In a possible embodiment, the mounting plate has two of said mounting holes above each other near a rear edge of the mounting plate, and a recess is formed in the rear edge of the mounting plate for receiving a front end portion of the trailing arm. Preferably, the recess in the rear edge is located rearward from the first end of the strut member.

In a particular embodiment the mounting plate has at least a first mounting hole, a second mounting hole and a third mounting hole, wherein:
- the first mounting hole is located upwardly from the second mounting hole and third mounting hole,
- the second mounting hole and third mounting hole are located above each other near a rear edge of the mounting plate,
- a recess is formed in the rear edge of the mounting plate for receiving a front end portion of the trailing arm, said recess being located between the second mounting hole and third mounting hole seen in a height direction,
- the first mounting hole is a round hole defining an adjustment pivot axis with the corresponding bolt for mounting the bearing bracket,
- the second mounting hole and third mounting hole are slotted holes each having a longitudinal axis, the respective longitudinal axes of the second and third mounting holes being substantially perpendicular to the respective radius from the adjustment pivot axis to the centre of the second and third mounting holes,
such that the position of the trailing arm can be adjusted in a substantially longitudinal direction of the vehicle when the bolts are loose, by swivelling the bearing bracket around the adjustment pivot axis defined by the first mounting hole and the corresponding bolt.

The mounting holes in the side plates of the bearing bracket in this embodiment are round holes. Preferably, the third mounting hole has a larger longitudinal dimension than the second mounting hole.

In another possible embodiment, the mounting plate has two of said mounting holes next to each other near a lower edge of the mounting plate.

The invention also relates to a vehicle chassis adapted to mount an air sprung wheel axle suspension on, wherein the chassis comprises at least two substantially parallel longitudinal beams and a number of cross beams interconnecting the longitudinal beams, wherein the vehicle chassis furthermore comprises at least two chassis mounting units as described in the above, wherein the mounting plate of each of the chassis mounting units is welded to one of the longitudinal chassis beams, and the second end of the strut member of each of the chassis mounting units is welded to one of the cross beams. Although welding is preferred, the mounting plate can alternatively be bolted to the chassis beam instead of welded. Also the strut beam may be bolted instead of welded.

The invention furthermore relates to a method for manufacturing a chassis mounting unit to mount an air sprung wheel axle suspension on, wherein:
- a mounting plate is cut from a steel plate, e.g. by laser cutting;
- mounting holes are formed in the mounting plate for bolting a bearing bracket to the mounting plate;
- a strut beam is cut from a steel plate, e.g. by laser cutting;
- the strut beam is arranged with a first end thereof against the mounting plate such that it extends in a plane perpendicular to the plane of the mounting plate; and
- the first end of the strut beam is welded to the mounting plate.

The invention also relates to a method for manufacturing a vehicle chassis, wherein the above mentioned method steps are performed, and wherein a chassis frame is provided comprising at least two substantially parallel longitudinal beams and a number of cross beams interconnecting the longitudinal beams, and wherein a second end of the strut beam of the chassis mounting unit is welded to a cross beam of the chassis frame and the mounting plate is welded to a longitudinal beam of the chassis frame.

An advantage of the method to manufacture the vehicle chassis in this way according to the invention is that the connection between the strut beam and the mounting plate is welded before the strut beam and the mounting plate are welded respectively to the chassis. Thereby the mounting plate and the strut beam can be positioned before welding such that a horizontal weld can be made which in general results in a better weld because gravity has no influence on the weld. In other words, first welding the mounting plate and the strut beam together avoids a weld in vertical direction.

In a further method step, the vehicle chassis may be painted after the strut beam is welded to the mounting plate and the crossbeam.

Further details of the invention will be described in the following description with reference to the drawings, wherein:
Fig. 1 shows an isometric view of an air sprung wheel axle suspension mounted to a vehicle chassis including a mounting unit according to the invention,
Fig. 2 shows a side view of the chassis with the suspension of Fig. 1,
Fig. 3 shows an exploded view of the chassis with the suspension of Fig. 1,
Fig. 4 shows an isometric view of the chassis shown in Fig. 1, including the mounting unit according to the invention,
Fig. 5 illustrates in a view in perspective a range of orientations in which a strut beam of the mounting unit of the invention can be mounted to a chassis frame,
Fig. 6 shows an isometric view of an air sprung wheel axle suspension mounted to a vehicle chassis including another embodiment of a mounting unit according to the invention,
Fig. 7 shows an isometric view of the chassis shown in Fig. 6, including the other mounting unit according to the invention,
Fig. 8 shows a side elevational view of a trailing arm connected to an adjustable bearing bracket assembly that may be used with a specific embodiment of a mounting unit according to the invention,
Fig. 9 shows a side elevational view of the bearing bracket assembly of Fig. 8 with one side plate removed, and
Fig. 10 shows a side elevational view of a mounting plate of the bearing bracket assembly of Fig. 8.

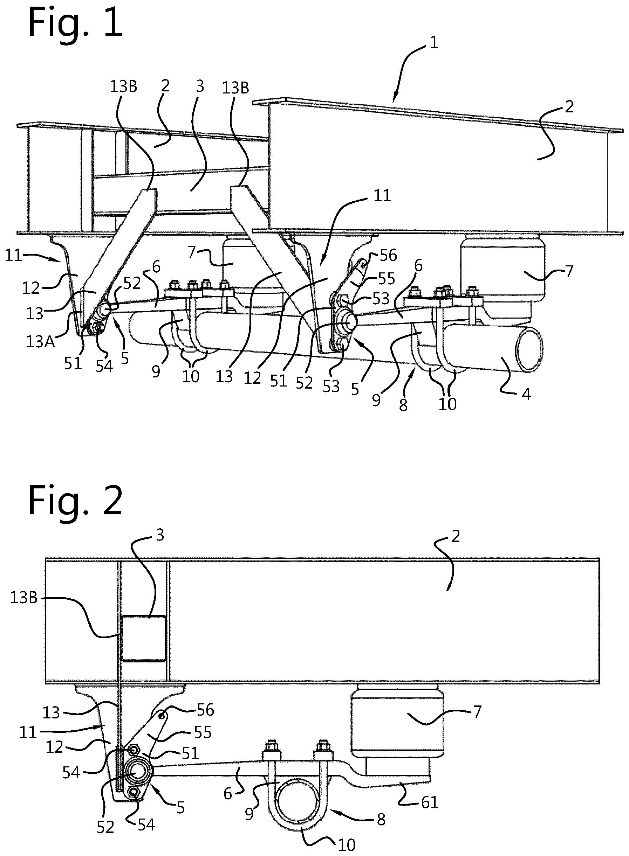

Fig. 1 shows part of a vehicle chassis 1 comprising longitudinal beams 2 and cross beams 3. The longitudinal beams 2 are in the embodiment shown configured as I-beams having a web and two flanges. The cross beams 3 are in the shown embodiment configured as tubular beams with a square cross section. It is noted that the vehicle chassis may also have longitudinal and crossbeams formed in another way.

A wheel axle is arranged under the chassis 1. The wheel axle comprises a tubular axle body 4, which extends in the transverse direction of the vehicle. The axle body 4 is attached to the chassis by means of an air sprung wheel axle suspension. The air sprung wheel axle suspension comprises a bearing bracket 5, a trailing arm 6, an air spring 7 and attachment means 8 to attach the axle body 4 to the trailing arm 6. In the exemplary embodiment shown the attachment means 8 comprise an axle pad 9 defining an axle seat for the axle body 4 and U-bolts 10 for tightening the axle body 4 in the axle seat, and for tightening the axle pad 9 against the trailing arm 6.

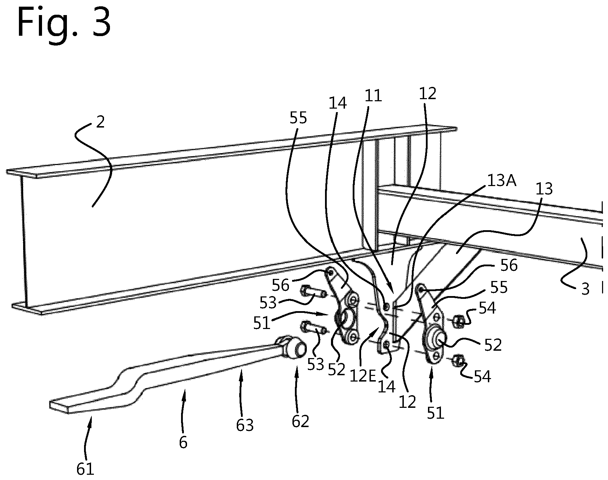

As can be seen in Fig. 3, the trailing arm 6 has a rear end portion 61 adapted to mount the air spring 7 on. The trailing arm 6 furthermore has a front end portion 62, which is pivotally connected to the bearing bracket 5.

In this example the trailing arm 6 is a flexible trailing arm made of spring steel. It has a spring portion 63, which has thickness taper, in particular with a parabolic thickness profile. The spring portion adjoins the front end portion 62.

Furthermore, in this example the front end portion 62 of the trailing arm 6 is formed as a hammerhead. The bearing bracket 5 comprises two side plates 51, which have cup-like receiving portions 52 for receiving the hammerhead of the trailing arm 6. The side plates 51 are bolted together by bolts 53 and nuts 54 with a mounting plate 12 in between (see Fig. 3) as will be described below in further detail.

It is to be noted that the trailing arm 6 having a hammerhead is only used by way of example. In the context of the present invention it is also possible to use a trailing arm having an eyelet at a front end portion. Such an eyelet can be attached in a well-known manner to a bearing bracket by means of a pivot bolt, which extends through two opposing pivot bolt mounting holes in the side plates of the bearing bracket. In the example shown the side plates may then thus have such mounting holes instead of the cup-like receiving portions 52.

In the embodiment shown the side plates 51 of the bearing bracket 5 furthermore have an arm 55, which extends rearward and upwardly. In an end portion of the arm 55 a mounting hole 56 is formed, which allows the mounting of a shock damper between the arms 55. In the figures this shock damper is not shown.

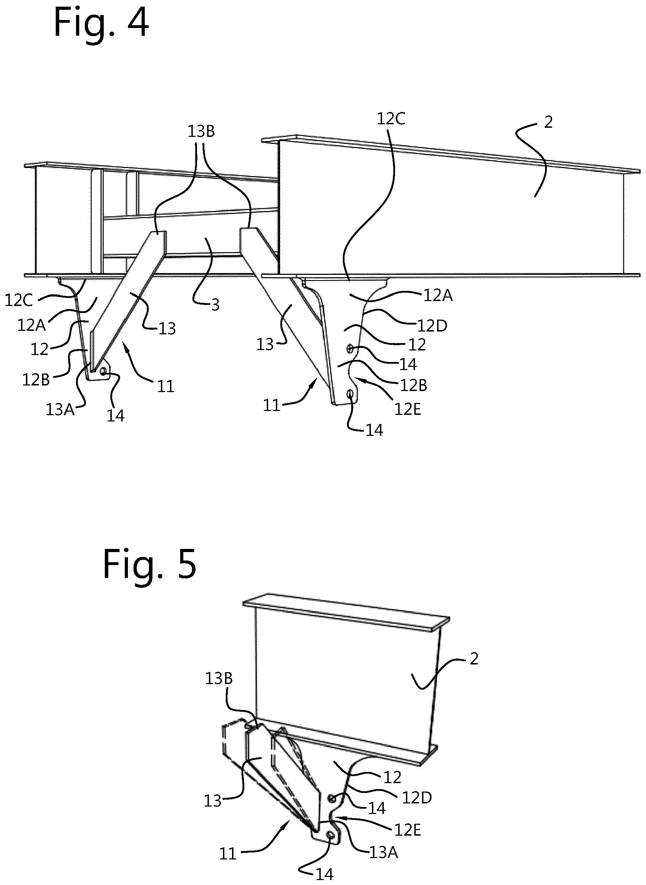

The present invention relates in particular to a chassis mounting unit 11, which will be described with reference to Figs. 4 and 5. The chassis mounting unit 11 comprises the above-mentioned mounting plate 12 and a strut beam 13. The mounting plate 12 is a substantially flat steel plate having a substantially triangular shape. It has an upper half 12A and a lower half 12B. The upper half 12A has an upper edge 12C which in use is positioned against the underside of the associated longitudinal chassis beam 2 and welded thereto. The mounting plate preferably extends in a plane, which is perpendicular to the axis of the axle body 4. In the particular example shown in the figures, the mounting plate 12 is aligned with the web of the longitudinal chassis beam 2.

In the lower half 12B of the mounting plate 12 mounting holes 14 are formed. The mounting holes 14 are for passing through fastening elements, preferably bolts 53, to attach the side plates 51 of the bearing bracket 5 to the mounting plate 12.

The strut beam 13 extends from the inner side of the mounting plate 12, in particular from the lower half 12B of the mounting plate 12, upwardly and inwardly. The strut beam 13 has a first end 13A, which is welded to the inner side of the mounting plate 12, and a second end 13B which in use is welded to the cross beam 3. The strut beam 13 is in the shown embodiment an elongate flat steel plate. In the assembled state on the chassis, the centre line of the strut beam 13 extends inclined upwardly from the mounting plate 12 to the cross beam 3.

During manufacturing of the mounting unit 11, the mounting plate 12 is cut from a steel plate. The strut beam 13 is also cut from a steel plate. The strut beam 13 is arranged with a first end 13A thereof against the mounting plate 12 such that it extends in a plane perpendicular to the plane of the mounting plate 12. Next, the first end 13A of the strut beam 13 is welded to the mounting plate 12. The mounting unit 11 is attached to the chassis frame 1 by welding the second end 13B of the strut beam, along the edges to the cross beam 3 and the mounting plate 12 is welded to a longitudinal beam 2 of the chassis frame 1.

After the mounting units 11 have been welded to the chassis frame 1, the entire assembly 1, 11 can be painted/coated.

One advantage of the strut beam 13 being cut from a flat plate is that it is slightly flexible such that the second end 13B can be moved to the crossbeam 3 surface, when the mounting plate 12 is already welded to the longitudinal beam 2. This is illustrated in Fig. 5, wherein in full lines the perpendicular position, and in dashed lines two other positions of the strut beam 13 are shown. In this way tolerances and slight deviations in the position of the cross beam relative to the position of the mounting plate can be overcome.

In the example of Figs. 1-5 the bearing bracket 5 comprises two opposite side plates 51, which are arranged at a rear end of the mounting plate 12, rearward of the location where the end 13A of the strut beam 13 is welded to the mounting plate 12. The mounting plate 12 has a recess 12E formed in a rear edge 12D thereof. The recess 12E is configured to receive the front end portion 62 of the trailing arm 6. In the example shown the front end portion 62 has a hammerhead configuration, however it is also possible that the front end portion has an eyelet configuration, which is received in the recess 12E. Preferably, the pivot axis defined by the hammerhead or the eyelet at the front end portion crosses the centre line of the strut beam 13 in the plane of the mounting plate 12. In this way, longitudinal forces and transverse forces applied by the trailing arm 6 on the mounting plate 12 are well absorbed and lead towards the chassis 1.

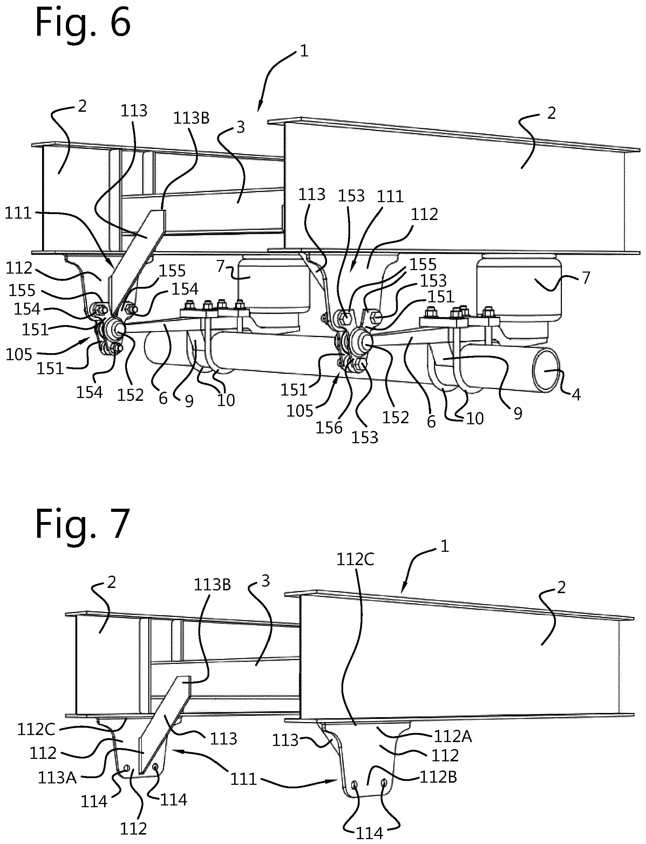

In Figs. 6 and 7 another embodiment is shown. The vehicle chassis 1 comprising longitudinal beams 2 and cross beams 3 is the same as in the previous figures. Also the axle body 4 of the wheel axle and the trailing arm 6, the air spring 7 and attachment means 8 to attach the axle body 4 to the trailing arm 6 are the same as in the previous figures and therefore referral is made to the above description for the description of the parts. The bearing bracket 105 and the chassis mounting unit 11 are different from the carrier bracket 5 and chassis mounting unit 11 as will be described below.

In Fig. 6 and 7 is shown a chassis mounting unit 111. The chassis mounting unit 111 comprises a mounting plate 112 and a strut beam 113. The mounting plate 112 is a substantially flat steel plate, which has a substantially rectangular or trapezoidal shape. It has an upper half 112A and a lower half 112B. The upper half 112A has an upper edge 112C which in use is positioned against the underside of the associated longitudinal chassis beam 2 and welded thereto. The mounting plate 112 preferably extends in a plane, which is perpendicular to the axis of the axle body 4. In the particular example shown in the figures, the mounting plate 112 is aligned with the web of the longitudinal chassis beam 2.

In the lower half 112B of the mounting plate 112 mounting holes 114 are formed. In this specific embodiment there are two holes 114, ate the same distance from the centre of the plate near the lower edge. The mounting holes 114 are for passing through fastening elements, preferably bolts 53, to attach the side plates 151 of the bearing bracket 105 to the mounting plate 12.

The strut beam 113 extends from the inner side of the mounting plate 112, in particular from the lower half 112B of the mounting plate 112, upwardly and inwardly. The strut beam 113 has a first end 113A, which is welded to the inner side of the mounting plate 112, and a second end 113B which in use is welded to the cross beam 3. The strut beam 113 is in the shown embodiment an elongate flat steel plate. In the assembled state on the chassis the centre line of the strut beam 113 extends inclined upwardly from the mounting plate 112 to the cross beam 3. The first end 113A is welded to the mounting plate 112 in the middle between the two mounting holes 114, thus substantially in the centre of the plate 112.

During manufacturing of the mounting unit 111, the mounting plate 112 is cut from a steel plate. The strut beam 113 is also cut from a steel plate. The strut beam 113 is arranged with a first end 113A thereof against the mounting plate 112 such that it extends in a plane perpendicular to the plane of the mounting plate 112. Next, the first end 113A of the strut beam 113 is welded to the mounting plate 112. The mounting unit 111 is attached to the chassis frame 1 by welding the second end 113B of the strut beam, along the edges to the cross beam 3 and the mounting plate 112 is welded to a longitudinal beam 2 of the chassis frame 1.

After the mounting units 111 have been welded to the chassis frame 1, the entire assembly can be painted/coated.

One advantage of the strut beam 113 being cut from a flat plate is that it slightly flexible such that the second end 113B can be moved to the crossbeam 3 surface, when the mounting plate 112 is already welded to the longitudinal beam 2. This is illustrated in Fig. 5 for the other embodiment, but works the same in the embodiment of Figs. 6-7.

In the example of Figs. 6-7 the bearing bracket 105 comprises two opposite side plates 151 that have a sort of "Y" shape, having two upward arms 155 having a mounting hole and a downward arm 156 having a mounting hole. In the heart of the Y-shaped side plates 151, a cup-like receiving portion 152 is formed for receiving the hammerhead of the trailing arm 6. The side plates 151 are bolted together by bolts 153 and nuts 154, wherein the upward arms 155 have the mounting plate 112 clamped in between. The cup-like receiving portions 152 and the lower arms 156 are located below the lower edge of the mounting plate 112. The lower arms 156 about each other around the mounting holes.

In the example shown the front end portion 62 of the trailing arm 6 has a hammerhead configuration, however it is also possible that the front end portion has an eyelet configuration, which is received between the side plates 151, wherein the side plates 151, instead of the cup-like receiving portions 152, are provided with holes for a pivot bolt.

In the above examples shown in the figures the mounting plates 12, 112 and the strut beams 13, 113 are welded to the overhead chassis beams 2 and 3. Although welding may be preferred at this point, embodiments are conceivable within the scope of the invention wherein the mounting plates and/or the strut beams of the chassis mounting unit according to the invention are attached to the overhead chassis beams by a bolted connection.

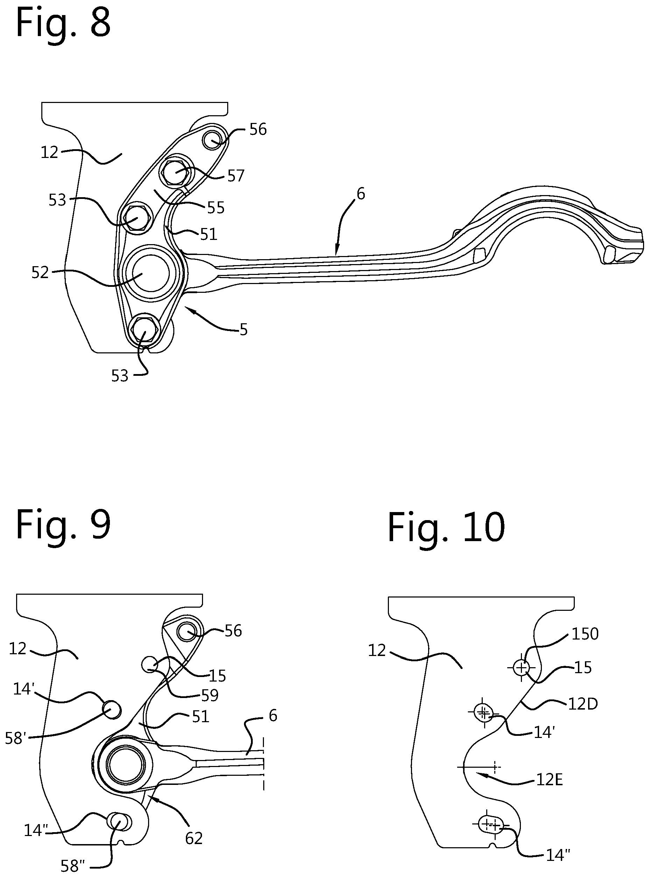

In Figs. 8-10 is shown an adjustable bearing bracket assembly that may be used with a specific embodiment of a mounting unit for pivotally connecting a trailing arm to a chassis. The construction is similar to the bearing bracket assembly shown in Figs. 1-3 and therefore the same parts are indicated by the same reference numerals. The difference is that the mounting holes 14', 14" in the mounting plate 12 as shown in Figs. 9 and 10 are formed as slotted holes instead of the round holes 14 shown in Fig. 3. Furthermore, an additional mounting hole 15 is formed in the mounting plate 12. The additional mounting hole 15 is a round hole and is located upward from the upper slotted mounting hole 14'. The mounting holes in the side plates 51 of the bearing bracket in this embodiment are round holes 58' and 58", which are visible in Fig. 9. The holes 58'and 58" are aligned with the slotted holes 14' and 14", respectively. In the arm 55 of the side plates 51 of the bearing bracket 5 an additional round hole 59 is provided to be aligned with the hole 15 in the mounting plate 12. A mounting bolt 57 is inserted through the additional holes 59 in the side plates 51 aligned with the hole 15 in the mounting plate 12. The bolt 57 defines an adjustment pivot axis 150 around which the side plates 51 can be swivelled with respect to the mounting plate 12. The elongate shape of the mounting holes 14' and 14" allows the swivelling movement while the not fully tightened bolts 53 are passing through the holes 14' and 14". The orientation of the side plates 51 can thus be adjusted, whereby the position of the front end portion 62 of the trailing arm 6 can be adjusted substantially in the longitudinal direction of the vehicle with respect to the mounting plate 12 and thus with respect to the chassis 1. In this way, the axle body 4 can be aligned by means of adjusting the position of the trailing arms 6. When the trailing arm 6 is positioned well, the bolts 53 and 57 can be fully tightened to fix the position of the trailing arm 6.

The adjustment pivot axis 150 defined by the bolt 57 passing through the mounting hole 15 is designed to be positioned at a short distance to the mounting hole 56 for the shock damper. The mounting hole 15 is therefore located more to the rear than the mounting holes 14' and 14". The short distance between the bolt 57 and the holes 56 has the effect that an adjustment of the position of the trailing arm 6 changes the position of the shock damper only to a minor extent. At least the configuration is designed such that the shock damper can fully function as a stroke limiter for the air spring that is part of the wheel axle suspension.

## Claims

1. Chassis mounting unit (11; 111) for mounting a bearing bracket (5; 105) to a vehicle chassis (1), said bearing bracket (5; 105) adapted to pivotally mount a trailing arm (6) of a wheel axle suspension, wherein the mounting unit (11; 111) comprises a mounting plate (12; 112) to be attached to an overhead longitudinal chassis beam (2) and adapted to mount the bearing bracket (5; 105) against, wherein the mounting plate (12; 112) has mounting holes (14; 114) for bolting the bearing bracket (5; 105) to the mounting plate (12; 112),
wherein the chassis mounting unit (11; 111) furthermore comprises a transverse strut beam (13; 113) having a first end (13A; 113A) and having an opposite second end (13B; 113B) to be attached to an overhead chassis beam (3), wherein the transverse strut beam (13; 113B) extends transversely to the mounting plate (12; 112), **characterized in that** the first end is welded to the mounting plate (12; 112).

2. Chassis mounting unit according to claim 1, wherein the mounting plate (12; 112) lies substantially in a first plane, and wherein the strut beam lies (13; 113) substantially in a second plane which is transverse, preferably perpendicular, to the first plane.

3. Chassis mounting unit according to claim 1 or 2, wherein the mounting plate (12; 112) has an upper half (12A; 112A) and a lower half (12B; 112B), wherein the first end (13A; 113A) of the strut beam (13; 113) is welded to the lower half (12B; 112B) of the mounting plate (12; 112).

4. Chassis mounting unit according to any of the preceding claims, wherein the mounting plate (12; 112) has an upper edge (12C; 112C) adapted to be welded to a longitudinal chassis beam (2) of the vehicle chassis (1), and/or
wherein the mounting plate has mounting holes at least in a zone near an upper edge for bolting the mounting plate to a longitudinal chassis beam.

5. Chassis mounting unit according to any of the preceding claims, wherein the strut beam (13; 113) extends inclined upwardly.

6. Chassis mounting unit according to claims 4 and 5, wherein the second end (13B; 113B) of the strut beam (13; 113) is located on a height level beyond the height level of the upper edge (12C; 112C) of the mounting plate (12; 112).

7. Chassis mounting unit according to any of the preceding claims, wherein the second end (13B; 113B) of the strut beam (13; 113) is adapted to be welded to the overhead chassis beam (3), and/or
wherein a zone near the second end of the strut beam has mounting holes adapted to bolt said zone to the overhead chassis beam.

8. Chassis mounting unit according to any of the preceding claims, wherein the mounting plate (12) has two of said mounting holes (14) above each other near a rear edge (12D) of the mounting plate (12), and wherein a recess (12E) is formed in the rear edge (12D) of the mounting plate (12) for receiving a front end portion (62) of the trailing arm (6), wherein, preferably, the recess (12E) in the rear edge (12D) is located rearward from the first end (13A) of the strut member (13).

9. Chassis mounting unit according to any of the claims 1-7, wherein the mounting plate (12) has at least a first mounting hole (15), a second mounting hole (14') and a third mounting hole (14"), wherein:
- the first mounting hole (15) is located upwardly from the second mounting hole (14') and third mounting hole (14"),
- the second mounting hole (14') and third mounting hole (14") are located above each other near a rear edge (12D) of the mounting plate (12),
- a recess (12E) is formed in the rear edge (12D) of the mounting plate (12) for receiving a front end portion (62) of the trailing arm (6), said recess (12E) being located between the second mounting hole (14') and third mounting hole (14") seen in a height direction,
- the first mounting hole (15) is a round hole defining an adjustment pivot axis (150) with the corresponding bolt (57) for mounting the bearing bracket (5),
- the second mounting hole (14') and third mounting hole (14") are slotted holes each having a longitudinal axis, the respective longitudinal axes of the second and third mounting holes (14', 14") being substantially perpendicular to the respective radius from the adjustment pivot axis (150) to the centre of the second and third mounting holes (14', 14"),
such that the position of the trailing arm (6) is adjustable in a substantially longitudinal direction of the vehicle when the bolts (53, 57) are loose, by swivelling the bearing bracket (5) around the adjustment pivot axis (150) defined by the first mounting hole (15) and the corresponding bolt (57),
wherein, preferably, the third mounting hole (14") has a larger longitudinal dimension than the second mounting hole (14').

10. Chassis mounting unit according to any of the claims 1-7, wherein the mounting plate (112) has two of said mounting holes (114) next to each other near a lower edge of the mounting plate (112).

11. Vehicle chassis (1) adapted to mount an air sprung wheel axle suspension on, wherein the chassis (1) comprises at least two substantially parallel longitudinal beams (2) and a number of cross beams (3) interconnecting the longitudinal beams (2), wherein the vehicle chassis (1) furthermore comprises at least two chassis mounting units (11; 111) according to any of the preceding claims, wherein the mounting plate (12; 112) of each of the chassis mounting units (11; 111) is welded or bolted to one of the longitudinal chassis beams (2), and the second end (13B; 113B) of the strut member (13; 113) of each of the chassis mounting units (11; 111) is welded or bolted to one of the cross beams (3).

12. Vehicle comprising a vehicle chassis according to claim 11 and an air sprung wheel axle suspension including a bearing bracket (5; 105), a trailing arm (6) pivotally mounted with a front end (62) to the bearing bracket (5; 105) and an air spring (7) mounted to a rear end portion (61) of the trailing arm (6), wherein an axle body (4) is attached to the trailing arm (6).

13. Method for manufacturing a chassis mounting unit (11; 111) to mount an air sprung wheel axle suspension on, wherein:
- a mounting plate (12; 112) is cut from a steel plate;
- mounting holes (14; 114) are formed in the mounting plate (12; 112) for bolting a bearing bracket (5; 105) to the mounting plate (12; 112);
- a strut beam (13; 113) is cut from a steel plate;
- the strut beam (13; 113) is arranged with a first end (13A; 113A) thereof against the mounting plate (12; 112) such that it extends in a plane perpendicular to the plane of the mounting plate (12; 112); and
- the first end of the strut beam (13A; 113A) is welded to the mounting plate (12; 112).

14. Method for manufacturing a vehicle chassis, wherein the method steps of claim 13 are performed, and wherein a chassis frame is provided comprising at least two substantially parallel longitudinal beams (2) and a number of cross beams (3) interconnecting the longitudinal beams (2),
wherein a second end (13B; 113B) of the strut beam (13; 113) of the chassis mounting unit (11; 111) is welded to a cross beam (3) of the chassis frame and the mounting plate (12; 112) is welded to a longitudinal beam (2) of the chassis frame, and
wherein, preferably, the vehicle chassis (1) is painted after the strut beam (13; 113) is welded to the mounting plate (12; 112) and the cross beam (3).

## Patentansprüche

1. Chassismontageeinheit (11; 111) zur Montage eines Lagerbügels (5; 105) an einem Fahrzeugchassis (1), wobei der Lagerbügel (5; 105) dazu geeignet ist, einen Längslenker (6) einer Radachsaufhängung schwenkbar zu montieren, wobei die Montageeinheit (11; 111) eine Montageplatte (12; 112) umfasst, die an einem obenliegenden Chassislängsträger (2) anzubringen und zur Montage des Lagerbügels (5; 105) daran geeignet ist,
wobei die Montageplatte (12; 112) Montagelöcher (14; 114) zum Schrauben des Lagerbügels (5; 105) an die Montageplatte (12; 112) aufweist,
wobei die Chassismontageeinheit (11; 111) ferner einen Querstrebenträger (13; 113) umfasst, der ein erstes Ende (13A; 113A) aufweist und ein gegenüberliegendes zweites Ende (13B; 113B) aufweist, das an einem obenliegenden Chassisträger (3) anzubringen ist, wobei sich der Querstrebenträger (13; 113B) quer zur Montageplatte (12; 112) erstreckt, **dadurch gekennzeichnet, dass** das erste Ende an die Montageplatte (12; 112) geschweißt ist.

2. Chassismontageeinheit nach Anspruch 1, wobei die Montageplatte (12; 112) im Wesentlichen in einer ersten Ebene liegt, und wobei der Strebenträger (13; 113) im Wesentlichen in einer zweiten Ebene liegt, die quer, vorzugsweise senkrecht, zur ersten Ebene steht.

3. Chassismontageeinheit nach Anspruch 1 oder 2, wobei die Montageplatte (12; 112) eine obere Hälfte (12A; 112A) und eine untere Hälfte (12B; 112B) aufweist, wobei das erste Ende (13A; 113A) des Strebenträgers (13; 113) an die untere Hälfte (12B; 112B) der Montageplatte (12; 112) geschweißt ist.

4. Chassismontageeinheit nach einem der vorhergehenden Ansprüche,
wobei die Montageplatte (12; 112) eine Oberkante (12C; 112C) aufweist, die dazu geeignet ist, an einen Chassislängsträger (2) des Fahrzeugchassis (1) geschweißt zu sein, und/oder
wobei die Montageplatte Montagelöcher zumindest in einem Bereich nahe einer Oberkante zum Schrauben der Montageplatte an einen Chassislängsträger aufweist.

5. Chassismontageeinheit nach einem der vorhergehenden Ansprüche, wobei sich der Strebenträger (13; 113) nach oben geneigt erstreckt.

6. Chassismontageeinheit nach Anspruch 4 und 5, wobei das zweite Ende (13B; 113B) des Strebenträgers (13; 113) auf einem Höhenniveau angeordnet ist, das über das Höhenniveau der Oberkante (12C; 112C) der Montageplatte (12; 112) hinausgeht.

7. Chassismontageeinheit nach einem der vorhergehenden Ansprüche,
wobei das zweite Ende (13B; 113B) des Strebenträgers (13; 113) dazu geeignet ist, an den obenliegenden Chassisträger (3) geschweißt zu sein, und/oder
wobei ein Bereich nahe dem zweiten Ende des Strebenträgers Montagelöcher aufweist, die dazu geeignet sind, den Bereich an den obenliegenden Chassisträger zu schrauben.

8. Chassismontageeinheit nach einem der vorhergehenden Ansprüche, wobei die Montageplatte (12) zwei der Montagelöcher (14) übereinander nahe einer Hinterkante (12D) der Montageplatte (12) aufweist, und wobei eine Aussparung (12E) in der Hinterkante (12D) der Montageplatte (12) zum Aufnehmen eines vorderen Endabschnitts (62) des Längslenkers (6) gebildet ist, wobei vorzugsweise die Aussparung (12E) in der Hinterkante (12D) hinter dem ersten Ende (13A) des Strebenelements (13) angeordnet ist.

9. Chassismontageeinheit nach einem der Ansprüche 1-7,
wobei die Montageplatte (12) mindestens ein erstes Montageloch (15), ein zweites Montageloch (14') und ein drittes Montageloch (14") aufweist, wobei:
- das erste Montageloch (15) oberhalb von dem zweiten Montageloch (14') und dem dritten Montageloch (14") angeordnet ist,
- das zweite Montageloch (14') und das dritte Montageloch (14") übereinander nahe einer Hinterkante (12D) der Montageplatte (12) angeordnet sind,
- eine Aussparung (12E) in der Hinterkante (12D) der Montageplatte (12) zum Aufnehmen eines vorderen Endabschnitts (62) des Längslenkers (6) gebildet ist, wobei die Aussparung (12E) in einer Höhenrichtung gesehen zwischen dem zweiten Montageloch (14') und dem dritten Montageloch (14") angeordnet ist,
- das erste Montageloch (15) ein Rundloch ist, das eine Einstellungsdrehachse (150) mit der entsprechenden Schraube (57) zur Montage des Lagerbügels (5) definiert,
- das zweite Montageloch (14') und das dritte Montageloch (14") Schlitzlöcher sind, die jeweils eine Längsachse aufweisen, wobei die jeweiligen Längsachsen des zweites und des dritten Montagelochs (14', 14") im Wesentlichen senkrecht zum jeweiligen Radius von der Einstellungsdrehachse (150) zur Mitte des zweiten und dritten Montagelochs (14', 14") stehen,
so dass die Position des Längslenkers (6) in im Wesentlichen einer Längsrichtung des Fahrzeugs bei gelösten Schrauben (53, 57) durch Schwenken des Lagerbügels (5) um die durch das erste Montageloch (15) und die entsprechende Schraube (57) definierte Einstellungsdrehachse (150) einstellbar ist,
wobei vorzugsweise das dritte Montageloch (14") eine größere Längsabmessung als das zweite Montageloch (14') aufweist.

10. Chassismontageeinheit nach einem der Ansprüche 1-7,
wobei die Montageplatte (112) zwei der Montagelöcher (114) nebeneinander nahe einer Unterkante der Montageplatte (112) aufweist.

11. Fahrzeugchassis (1), das zur Montage einer luftgefederten Radachsaufhängung daran geeignet ist, wobei das Chassis (1) mindestens zwei im Wesentlichen parallele Längsträger (2) und eine Anzahl von Querträgern (3) umfasst, die die Längsträger (2) miteinander verbinden, wobei das Fahrzeugchassis (1) ferner mindestens zwei Chassismontageeinheiten (11; 111) nach einem der vorhergehenden Ansprüche umfasst, wobei die Montageplatte (12; 112) jeder der Chassismontageeinheiten (11; 111) an einen der Chassislängsträger (2) geschweißt oder geschraubt ist, und das zweite Ende (13B; 113B) des Strebenelements (13; 113) jeder der Chassismontageeinheiten (11; 111) an einen der Querträger (3) geschweißt oder geschraubt ist.

12. Fahrzeug, umfassend ein Fahrzeugchassis nach Anspruch 11 und eine luftgefederte Radachsaufhängung mit einem Lagerbügel (5; 105), einem drehbar an einem vorderen Ende (62) des Lagerbügels (5; 105) montierten Längslenker (6) und einer an einem hinteren Endabschnitt (61) des Längslenkers (6) montierten Luftfeder (7), wobei ein Achskörper (4) an dem Längslenker (6) angebracht ist.

13. Verfahren zur Herstellung einer Chassismontageeinheit (11; 111) zur Montage einer luftgefederten Radachsaufhängung daran, wobei:
- eine Montageplatte (12; 112) aus einer Stahlplatte ausgeschnitten wird;
- Montagelöcher (14; 114) in der Montageplatte (12; 112) zum Schrauben eines Lagerbügels (5; 105) an die Montageplatte (12; 112) gebildet werden;
- ein Strebenträger (13; 113) aus einer Stahlplatte ausgeschnitten wird;
- der Strebenträger (13; 113) mit einem ersten Ende (13A; 113A) davon an der Montageplatte (12; 112) derart angeordnet wird, dass er sich in einer Ebene senkrecht zur Ebene der Montageplatte (12; 112) erstreckt; und
- das erste Ende des Strebenträgers (13A; 113A) an die Montageplatte (12; 112) geschweißt wird.

14. Verfahren zur Herstellung eines Fahrzeugchassis, wobei die Verfahrensschritte nach Anspruch 13 durchgeführt werden, und wobei ein Chassisrahmen bereitgestellt wird, der mindestens zwei im Wesentlichen parallele Längsträger (2) und eine Anzahl von Querträgern (3) umfasst, die die Längsträger (2) miteinander verbinden,
wobei ein zweites Ende (13B; 113B) des Strebenträgers (13; 113) der Chassismontageeinheit (11; 111) an einen Querträger (3) des Chassisrahmens geschweißt wird und die Montageplatte (12; 112) an einen Längsträger (2) des Chassisrahmens geschweißt wird, und
wobei vorzugsweise das Fahrzeugchassis (1) lackiert wird, nachdem der Strebenträger (13; 113) an die Montageplatte (12; 112) und den Querträger (3) geschweißt ist.

## Revendications

1. Unité de montage de châssis (11 ; 111) pour monter un support de palier (5 ; 105) sur un châssis de véhicule (1), ledit support de palier (5 ; 105) étant adapté pour monter de façon pivotante un bras oscillant (6) d'une suspension d'essieu de roue, dans laquelle l'unité de montage (11 ; 111) comprend une plaque de montage (12 ; 112) devant être fixée à une poutre de châssis longitudinale en hauteur (2) et adaptée pour monter le support de palier (5 ; 105) contre celle-ci, dans laquelle la plaque de montage (12 ; 112) a des trous de montage (14 ; 114) pour boulonner le support de palier (5 ; 105) sur la plaque de montage (12 ; 112),
dans laquelle l'unité de montage de châssis (11 ; 111) comprend en outre une poutre jambe de force transversale (13 ; 113) ayant une première extrémité (13A ; 113A) et ayant une seconde extrémité opposée (13B ; 113B) devant être fixée à une poutre de châssis en hauteur (3), dans laquelle la poutre jambe de force transversale (13 ; 113B) s'étend transversalement à la plaque de montage (12 ; 112), **caractérisée en ce que** la première extrémité est soudée sur la plaque de montage (12 ; 112).

2. Unité de montage de châssis selon la revendication 1, dans laquelle la plaque de montage (12 ; 112) se trouve sensiblement dans un premier plan, et dans laquelle la poutre jambe de force (13 ; 113) se trouve sensiblement dans un second plan qui est transversal, de préférence perpendiculaire, au premier plan.

3. Unité de montage de châssis selon la revendication 1 ou 2, dans laquelle la plaque de montage (12 ; 112) a une moitié supérieure (12A ; 112A) et une moitié inférieure (12B ; 112B), dans laquelle la première extrémité (13A ; 113A) de la poutre jambe de force (13 ; 113) est soudée sur la moitié inférieure (12B ; 112B) de la plaque de montage (12 ; 112).

4. Unité de montage de châssis selon l'une quelconque des revendications précédentes, dans laquelle la plaque de montage (12 ; 112) a un bord supérieur (12C ; 112C) adapté pour être soudé sur une poutre de châssis longitudinale (2) du châssis de véhicule (1), et/ou dans laquelle la plaque de montage a des trous de montage au moins dans une zone près d'un bord supérieur pour boulonner la plaque de montage sur une poutre de châssis longitudinale.

5. Unité de montage de châssis selon l'une quelconque des revendications précédentes, dans laquelle la poutre jambe de force (13 ; 113) s'étend de façon inclinée vers le haut.

6. Unité de montage de châssis selon les revendications 4 et 5, dans laquelle la seconde extrémité (13B ; 113B) de la poutre jambe de force (13 ; 113) est située sur un niveau de hauteur au-delà du niveau de hauteur du bord supérieur (12C ; 112C) de la plaque de montage (12 ; 112).

7. Unité de montage de châssis selon l'une quelconque des revendications précédentes, dans laquelle la seconde extrémité (13B ; 113B) de la poutre jambe de force (13 ; 113) est adaptée pour être soudée sur la poutre de châssis en hauteur (3), et/ou
dans laquelle une zone près de la seconde extrémité de la poutre jambe de force a des trous de montage adaptées pour boulonner ladite zone sur la poutre de châssis en hauteur.

8. Unité de montage de châssis selon l'une quelconque des revendications précédentes,dans laquelle la plaque de montage (12) a deux desdits trous de montage (14) l'un au-dessus de l'autre près d'un bord arrière (12D) de la plaque de montage (12), et dans laquelle un évidement (12E) est formé dans le bord arrière (12D) de la plaque de montage (12) pour recevoir une partie d'extrémité avant (62) du bras oscillant (6), dans laquelle, de préférence, l'évidement (12E) dans le bord arrière (12D) est situé vers l'arrière par rapport à la première extrémité (13A) de l'élément jambe de force (13).

9. Unité de montage de châssis selon l'une quelconque des revendications 1 à 7, dans laquelle la plaque de montage (12) a au moins un premier trou de montage (15), un deuxième trou de montage (14') et un troisième trou de montage (14"), dans laquelle :
- le premier trou de montage (15) est situé vers le haut par rapport au deuxième trou de montage (14') et au troisième trou de montage (14"),
- le deuxième trou de montage (14') et le troisième trou de montage (14") sont situés l'un au-dessus de l'autre près d'un bord arrière (12D) de la plaque de montage (12),
- un évidement (12E) est formé dans le bord arrière (12D) de la plaque de montage (12) pour recevoir une partie d'extrémité avant (62) du bras oscillant (6), ledit évidement (12E) étant situé entre le deuxième trou de montage (14') et le troisième trou de montage (14") en vue dans un sens de la hauteur,
- le premier trou de montage (15) est un trou rond définissant un axe de pivotement d'ajustement (150) avec le boulon correspondant (57) pour monter le support de palier (5),
- le deuxième trou de montage (14') et le troisième trou de montage (14") sont des trous oblongs ayant chacun un axe longitudinal, les axes longitudinaux respectifs des deuxième et troisième trous de montage (14', 14") étant sensiblement perpendiculaires au rayon respectif depuis l'axe de pivotement d'ajustement (150) jusqu'au centre des deuxième et troisième trous de montage (14', 14"),
de telle sorte que la position du bras oscillant (6) soit ajustable dans un sens sensiblement longitudinal du véhicule lorsque les boulons (53, 57) sont desserrés, en faisant tourner le support de palier (5) autour de l'axe de pivotement d'ajustement (150) défini par le premier trou de montage (15) et le boulon correspondant (57),
dans laquelle, de préférence, le troisième trou de montage (14") a une dimension longitudinale plus grande que le deuxième trou de montage (14').

10. Unité de montage de châssis selon l'une quelconque des revendications 1 à 7, dans laquelle la plaque de montage (112) a deux desdits trous de montage (114) l'un à côté de l'autre près d'un bord inférieur de la plaque de montage (112).

11. Châssis de véhicule (1) adapté pour monter une suspension d'essieu de roue à ressort pneumatique sur celui-ci, dans lequel le châssis (1) comprend au moins deux poutres longitudinales (2) sensiblement parallèles et un nombre de poutres transversales (3) reliant mutuellement les poutres longitudinales (2), dans lequel le châssis de véhicule (1) comprend en outre au moins deux unités de montage de châssis (11 ; 111) selon l'une quelconque des revendications précédentes, dans lequel la plaque de montage (12 ; 112) de chacune des unités de montage de châssis (11 ; 111) est soudée ou boulonnée sur une des poutres de châssis longitudinales (2), et la seconde extrémité (13B ; 113B) de l'élément jambe de force (13 ; 113) de chacune des unités de montage de châssis (11 ; 111) est soudée ou boulonnée sur une des poutres transversales (3).

12. Véhicule comprenant un châssis de véhicule selon la revendication 11 et une suspension d'essieu de roue à ressort pneumatique incluant un support de palier (5 ; 105), un bras oscillant (6) monté de façon pivotante, avec une extrémité avant (62) sur le support de palier (5 ; 105), et un ressort pneumatique (7) monté sur une partie d'extrémité arrière (61) du bras oscillant (6), dans lequel un corps d'essieu (4) est fixé au bras oscillant (6).

13. Procédé pour fabriquer une unité de montage de châssis (11 ; 111) pour monter une suspension d'essieu de roue à ressort pneumatique sur celle-ci, dans lequel :
- une plaque de montage (12 ; 112) est coupée à partir d'une tôle d'acier ;
- des trous de montage (14 ; 114) sont formés dans la plaque de montage (12 ; 112) pour boulonner un support de palier (5 ; 105) sur la plaque de montage (12 ; 112) ;
- une poutre jambe de force (13 ; 113) est coupée à partir d'une tôle d'acier ;
- la poutre jambe de force (13 ; 113) est agencée avec une première extrémité (13A ; 113A) de celle-ci contre la plaque de montage (12 ; 112) de telle sorte qu'elle s'étende dans un plan perpendiculaire au plan de la plaque de montage (12 ; 112) ; et
- la première extrémité de la poutre jambe de force (13A ; 113A) est soudée sur la plaque de montage (12 ; 112).

14. Procédé pour fabriquer un châssis de véhicule, dans lequel les étapes de procédé de la revendication 13 sont réalisées, et dans lequel un cadre de châssis est prévu comprenant au moins deux poutres longitudinales (2) sensiblement parallèles et un nombre de poutres transversales (3) reliant mutuellement les poutres longitudinales (2),
dans lequel une seconde extrémité (13B ; 113B) de la poutre jambe de force (13 ; 113) de l'unité de montage de châssis (11 ; 111) est soudée sur une poutre transversale (3) du cadre de châssis et la plaque de montage (12 ; 112) est soudée sur une poutre longitudinale (2) du cadre de châssis, et
dans lequel, de préférence, le châssis de véhicule (1) est peint après que la poutre jambe de force (13 ; 113) est soudée sur la plaque de montage (12 ; 112) et la poutre transversale (3).
